# FASCICULE DE BREVET EUROPEEN

(11) **EP 0 479 675 B1**
(45) Date de publication et mention de la délivrance du brevet: **24.05.1995**
(21) Numéro de dépôt: 91402631.5
(22) Date de dépôt: 03.10.1991
(51) Int. Cl.: C03B 37/04, C03B 37/07

(54) **Procédé et dispositif de contrôle de la température d'une assiette de fibrage**
Verfahren und Vorrichtung zum Regeln der Temperatur einer Zerfaserungsscheibe
Method and appratus for regulating the temperature of a fibre spinner wheel

(30) Priorité: 04.10.1990 FR 9012228
(43) Date de publication de la demande: 08.04.1992
(73) Titulaire: ISOVER SAINT-GOBAIN, F-92400 Courbevoie (FR)
(72) Inventeur: Pasquier, Michel, F-60140 Liancourt (FR); Guyot, Daniel, F-60290 Rantigny (FR); Battigelli, Jean, F-60290 Rantigny (FR)
(74) Mandataire: Menes, Catherine

(56) Documents cités:
- EP-A- 0 219 433
- FR-A- 2 443 436
- US-A- 4 392 879

## Description

L'invention concerne un procédé de contrôle de la température d'une assiette de fibrage utilisée lors de la fabrication de fibres de verre dites d'isolation. Elle s'applique notamment à l'automatisation des lignes de production de laine de verre entrant principalement dans la composition de produits d'isolation thermique et/ou acoustique.

Les fibres de verre dites d'isolation sont couramment produites par centrifugation interne, c'est-à-dire en introduisant un filet de verre fondu dans un centrifugeur encore appelé assiette de fibrage, tournant à grande vitesse et présentant à sa périphérie un très grand nombre d'orifices. Sous l'action de la force centrifuge le verre est projeté au travers de ces orifices sous forme de filaments. A la force centrifuge vient éventuellement s'ajouter un étirage par un courant gazeux à température et vitesse élevées, émis tangentiellement à la paroi perforée du centrifugeur. Dans ces techniques, le centrifugeur - dont le diamètre peut éventuellement excéder un mètre - est très fortement sollicité par des contraintes d'origine mécanique, (vitesse de rotation élevée) thermique (verre autour de 1000°C°) et chimique (corrosion par le verre). Or, la qualité des fibres produites dépend très étroitement du bon fonctionnement du centrifugeur, c'est-à-dire de ce bon état général et d'un respect des consignes de vitesse et de température.

La vitesse n'a guère de raison d'être modifiée par des perturbations en cours de fabrication et surtout peut être entièrement maîtrisée indépendamment de tous les autres paramètres si on choisit par exemple d'entraîner l'arbre par un moteur asynchrone piloté de façon adéquate. La consigne donnée pour la vitesse de rotation peut donc être considérée comme strictement respectée.

Par contre, la température du centrifugeur est sensible à bon nombre de facteurs qui sont par exemple, l'action de brûleurs internes chauffant l'intérieur du centrifugeur et de moyens complémentaires de chauffage par exemple par induction magnétique visant plus spécialement le bas du centrifugeur, la température du verre, le débit du verre, la température du courant d'étirage gazeux éventuel émis à proximité immédiate du centrifugeur ou de toute façon de l'ambiance plus ou moins chaude régnant autour du centrifugeur, le refroidissement plus ou moins intense dû à la rotation à vitesse plus ou moins grande et le centrifugeur lui-même qui peut notamment être déformé après une certaine durée d'utilisation et de ce fait subir différemment l'action d'échauffement par les brûleurs.

Or comme indiqué précédemment, une température inadéquate entraîne une perturbation importante du fibrage. Ainsi, si le centrifugeur est trop froid il peut se produire un début de dévitrification qui rend le verre impropre au fibrage ; un centrifugeur trop chaud est en limite de rupture thermique et peut d'autre part conduire à la formation d'infibrés ou de fibres extrêmement fines non souhaitées, dues à une trop grande fluidité du verre.

Pour contrôler la température du centrifugeur, il a été proposé dans US-A-4 392 879 de placer des thermocouples sur la paroi interne du centrifugeur, de transformer le signal électrique reçu en une onde électromagnétique analysée par un récepteur fixe non solidaire en rotation du centrifugeur. Le signal électrique reçu sert ensuite de paramètre de régulation du brûleur annulaire d'étirage gazeux placé juste à la périphérie du centrifugeur. Dans cette technique, le nombre de points analysés de la surface du centrifugeur est forcément limité par rapport à la hauteur de la bande et surtout par rapport à la longueur totale de la circonférence du centrifugeur. Par ailleurs, la température interne n'est pas toujours très instructive car sa valeur peut être en fait plus caractéristique de le température du verre fondu accumulé sous forme d'une réserve que de la température réelle du centrifugeur. Subsidiairement, un thermocouple peut se détacher de la paroi interne et indiquer alors la température d'un point autre que celui qu'il est sensé analyser. Or, la température d'un centrifugeur n'est pas constante sur toute la hauteur de la bande, ne serait-ce que parce que le verre ne la mouille pas toujours bien uniformément ; ces hétérogénéités de température sont donc considérées comme normales tant qu'elles restent dans des limites définies et une mesure délocalisée, donc mal interprétée, peut conduire à un pilotage anarchique du brûleur annulaire.

Il est de plus connu selon EP-B1-219 433 un procédé de fabrication de fibres de verre dans lequel on détermine la température maximale du centrifugeur par une mesure continue du rayonnement émis superficiellement par ladite bande, dans un mouvement de va-et-vient sur toute la hauteur de la bande. La température maximale est ensuite utilisée comme grandeur de régulation du brûleur. L'appareillage est moins fragile que dans le cas précédent. En outre, on a une mesure effective de la température du point le plus chaud et non celle de celui qui est supposé tel. On peut ainsi éviter les surchauffes où qu'elles se produisent et non seulement là où on s'attend à ce qu'elles se produisent. Par ailleurs, on mesure la température externe et non interne de la bande du centrifugeur, la température externe étant plus représentative de la température de l'étirage par centrifugation.

Il est toutefois apparu que le dispositif connu de EP-B1-219 433 est surtout avantageux lors de la phase de mise en route du fibrage, lorsqu'il s'agit d'élever progressivement la température du centrifugeur sans créer de chocs thermiques, le dispositif permettant d'être systématiquement en dessous des températures critiques et de bien respecter le profil théorique d'échauffement de la pièce. En phase de fibrage, on a constaté qu'il n'est pas toujours souhaitable de modifier les caractéristiques du gaz d'étirage car on modifie alors la qualité des fibres produites, la relation entre la température du centrifugeur et la température des gaz d'étirage n'étant pas purement univoque mais faisant intervenir d'autres paramètres tels la déformation du centrifugeur qui par exemple s'échauffe en se rapprochant du brûleur. De plus, nous avons indiqué précédemment que la température du centrifugeur n'est normalement pas constante sur toute la hauteur de la bande ; or si des écarts de faible amplitude sont considérés comme normaux, des écarts trop importants sont par contre dommageables au centrifugeur lui-même, et à la qualité des fibres produites dans la mesure où ils supposent un fonctionnement anormal du dispositif.

Par ailleurs, les dispositifs connus de US-A-4392 879 et EP-B1-219 433 sont tous deux pratiquement inopérants pour ce qui concerne le repérage de défauts tels un début de fissuration du centrifugeur ou encore une déformation due à un bas du centrifugeur se déjetant vers l'extérieur. Or ces défauts peuvent entraîner la rupture du centrifugeur dans la hotte de fibrage, avec un risque non négligeable d'inflammation et en tout cas des dégâts fort importants voire un danger de blessure pour les ouvriers intervenant à proximité.

Les auteurs de la présente invention se sont donnés pour but un nouveau procédé de contrôle d'un centrifugeur de fibrage apte à fournir des renseignements qui peuvent être mis en correspondance avec diverses anomalies du processus de fibrage en vue d'une intervention rapide, manuelle ou automatisée.

Ce but est atteint selon l'invention par le fait que lors de la fabrication de fibres minérales notamment de fibres de verre par un procédé faisant intervenir une centrifugation interne au moyen d'un centrifugeur dont la bande périphérique est percée d'un grand nombre d'orifices de sortie, on mesure le rayonnement émis superficiellement par ladite bande périphérique en vue de déterminer la température pérature des points de ladite bande périphérique et la coordonnée verticale de chacun de ces points correspondant.

Par rapport à l'état de la technique connu de EP-B1-219 433 on a donc une étape supplémentaire de corrélation entre les températures mesurées et leur localisation.

Le premier point remarquable du profil mesuré correspond au point le plus chaud de la partie perforée de la bande périphérique, point qui sera par la suite dénommé plus brièvement point le plus chaud, bien que dans de nombreux cas le point effectivement le plus chaud du centrifugeur soit situé hors de cette zone perforée où se forment les filaments. Dans des conditions normales de fibrage, à vitesse et température constantes, le point le plus chaud est fixe et déterminé par les conditions d'écoulement du verre. L'expérience montre que le point le plus chaud est associé au maximum de débit. Lorsque la viscosité du verre fondu diminue (ou en d'autres termes si la température du verre augmente ou si la composition du verre a été modifiée), le point le plus chaud va se déplacer, en l'occurrence descendre. De plus, et il s'agit là d'un aspect tout particulièrement avantageux de l'invention, si de nouvelles possibilités d'échappement s'offrent au verre, cas d'un début de fissuration par exemple, le point chaud va à nouveau se décaler pour se centrer au niveau de cette fissure. Sachant que la propagation d'une fissure n'est pas instantanée, l'opérateur dispose d'un temps très suffisant pour interrompre la coulée de verre et arrêter le centrifugeur selon la procédure d'arrêt normale, et non selon une procédure d'urgence toujours plus risquée.

En règle générale, il a été indiqué plus haut que les auteurs de la présente invention préfèrent ne pas tenter, en période de fibrage, de corriger la température du point le plus chaud en modifiant la température et/ou le débit des gaz chauds émis par le brûleur annulaire d'étirage, cette intervention se faisant au prix d'une modification des caractéristiques des fibres dues à une variation des conditions d'étirage. Par contre, hors période de fibrage - notamment lors de l'arrêt ou la mise en route d'une production - ou si les gaz émis sont simplement des flammes molles destinées seulement à entretenir une ambiance chaude autour du centrifugeur - il est tout particulièrement intéressant d'utiliser la température maximale mesurée comme grandeur de régulation du brûleur annulaire.

Ce premier contrôle est avantageusement complété par la mesure de la température du bas de la bande périphérique. En effet, si le centrifugeur se déjette, le bas du centrifugeur pénètre dans la zone des gaz chauds émis par le brûleur annulaire, est alors réchauffé de façon plus importante par ces gaz et voit donc sa température augmentée. Cette élévation de température est donc caractéristique d'une fatigue importante du centrifugeur dont le remplacement doit alors être préparé. Si en revanche, la température du bas de la bande diminue sensiblement, cela signifie par exemple un début de dévitrification du verre accumulé au fond du centrifugeur et fortement refroidi par l'air froid présent sous le centrifugeur et intensément brassé du fait de la rotation. Il est alors nécessaire d'augmenter la quantité de chaleur apportée spécifiquement au fond du centrifugeur notamment par un dispositif de chauffage par induction magnétique tel que connu par exemple du brevet FR-A-2 443 436.

De façon préférée, on repère de plus sur le profil, la température du haut de la bande périphérique, point le plus chaud au-dessus de la partie perforée, dont une brusque élévation est caractéristique d'une anomalie par exemple un centrifugeur victime d'un début de fissuration ou un brûleur annulaire décentré émettant des gaz dirigés directement vers le centrifugeur et non uniquement à la périphérie, alors qu'une variation plus progressive - corollée éventuellement à une augmentation de la température du bas de bande, est plutôt l'indice d'une usure anormale du centrifugeur.

Dans sa variante préférée, l'invention propose ainsi de surveiller plus particulièrement trois points de la bande périphérique dont les coordonnées sont parfaitement déterminées, mais non définies a priori. Avantageusement ces trois points sont déduits par le calcul de la courbe dérivée du profil de température, les trois points mesurés correspondant à trois extrêmes de ce profil. De préférence toutefois, le calculateur part des coordonnées du point le plus bas pour déterminer celles du point le plus haut, qu'il est parfois assez difficile de repérer sur le profil de température, mais est distant du point le plus bas d'une distance correspondant exactement à la hauteur de la bande périphérique.

Avantageusement, l'opérateur est averti par une série de témoins d'alarme de toute température s'écartant de la normale correspondant donc à des mauvaises conditions de fonctionnement, les actions requises pour un retour à la normale étant déclenchées ou par l'opérateur ou de façon entièrement automatisée, ce dernier cas étant préféré lorsque l'arrêt de la coulée de verre fondu est nécessaire notamment pour une question de sécurité.

Le procédé selon l'invention peut être avantageusement mis en oeuvre au moyen d'un pyromètre à rayonnement infrarouge muni d'une optique pivotante avec une cible de visée rectangulaire, longue et étroite, de manière à enregistrer le rayonnement d'une surface relativement grande sans nuire pour autant à la précision de la mesure, une résolution de plus de 20 points étant préférée. Avantageusement, seule l'optique du pyromètre est montée à proximité du centrifugeur, mais à une distance néanmoins supérieure ou égale à 1 mètre et les signaux sont transmis par une fibre optique au boîtier électronique de calcul placé à distance et muni de dispositifs d'entrée/sortie usuels.

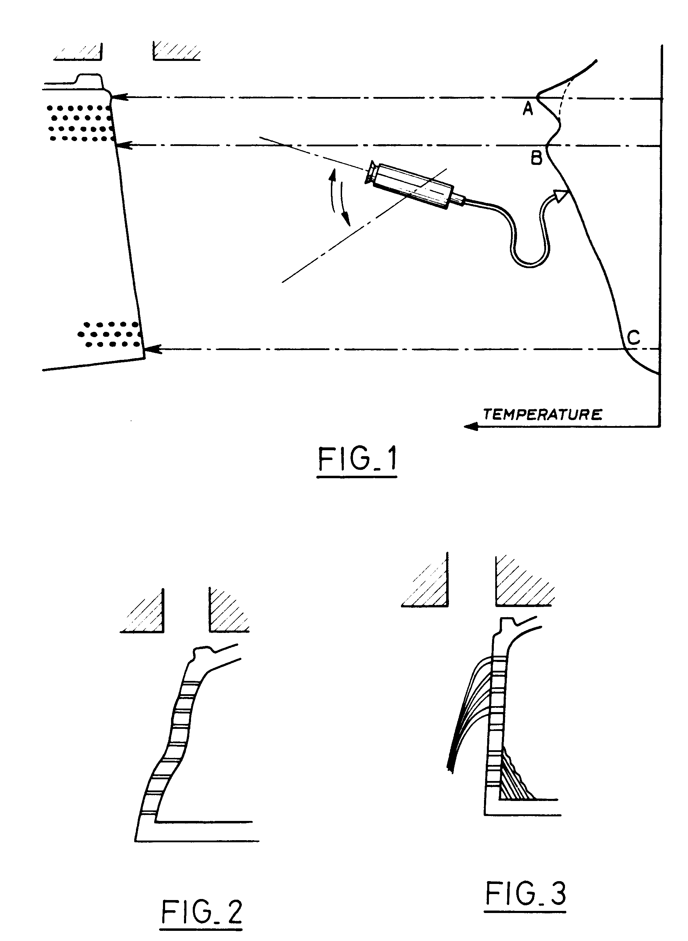

D'autres détails et caractéristiques avantageuses de l'invention ressortent de la description faite ci-après en référence aux dessins annexés qui représentent :
. **figure 1** : un schéma illustrant le procédé de contrôle selon l'invention,
. **figure 2** : un schéma du centrifugeur dont la bande périphérique est déformée,
. **figure 3** : un schéma correspondant à une température de bas de bande trop basse.

Sur la figure 1 on a représenté à gauche la bande périphérique 1, percée de plusieurs milliers d'orifices de sortie 2, d'un centrifugeur utilisé pour la fabrication par exemple de fibres de verre. Dans le cas d'un étirage non purement centrifuge, le centrifugeur est entouré par la lèvre d'un brûleur annulaire 3 qui génère un courant gazeux propre à maintenir autour du centrifugeur une température élevée. La distance d à chaud qui sépare normalement le haut de la bande périphérie du centrifugeur de la lèvre du brûleur annulaire n'est que de quelques millimètres ; tout décentrage entraîne donc une perturbation importante des conditions de chauffage. Le centrifugeur tourne à grande vitesse et est alimenté de façon continue par un jet de verre fondu déversé de préférence sur un organe distributeur constitué par un corps cylindrique creux muni d'orifices relativement gros dont le rôle est de diviser la matière fondue et de la diriger sous l'effet de la force centrifuge vers la surface intérieure de la bande périphérique qu'elle nappe et dont elle s'échappe par les multiples orifices 2, sous la forme d'une série de filaments radiaux.

Ces filaments radiaux pénètrent dans le courant gazeux émis par le brûleur externe et éventuellement une seconde couronne de soufflage, sont étirés par ce courant gazeux et ainsi transformés en fibres.

A une distance par exemple de l'ordre de 1 mètre, on place la partie optique d'un pyromètre dont le maximum de sensibilité est de préférence pour le domaine de radiations proche de l'infrarouge donc entre 0,6 et 1,1 micron. Cette optique est montée pivotante et balaye un angle de façon à couvrir par un mouvement continu de va-et-vient toute la hauteur de la bande périphérique. La cible visée doit présenter une surface assez grande, de préférence de l'ordre de 10 à 50 mm² afin d'obtenir une bonne sensibilité de mesure. Par ailleurs, la hauteur de la cible doit être aussi petite que possible afin d'obtenir une grande précision quant aux coordonnées verticales des points mesurés. Un bon compromis est obtenu avec une cible rectangulaire de 1 à 3 mm de haut pour 20 mm de large.

Toute l'électronique associée à la partie optique proprement dite est de préférence placée à grande distance, les deux parties étant reliées par une fibre optique si nécessaire refroidie. A chaque balayage de la bande périphérique, on enregistre le profil de température sur la hauteur de la bande. Ce profil comporte trois points remarquables A, B et C correspondant respectivement au point le plus haut de la bande, au point le plus chaud et au point le plus froid. Il est à noter que le point A ne correspond pas dans tous les cas à un extrémum de la courbe mais peut être retrouvé grâce à sa coordonnée verticale par définition fixe et au positionnement du point C, l'écart entre A et C correspondant à la hauteur de la bande périphérique. De préférence, les points B et C sont repérés par analyse de la courbe dérivée correspondant au profil de température.

La connaissance de ce profil de température ou plus précisément de ces points A, B et C permet une analyse continue du processus de fibrage et une régulation automatisée appropriée. Avantageusement le profil est établi au moins toutes les minutes et de préférence trois à quatre fois par minute, ce qui est bien sûr impossible à réaliser par des contrôles par les opérateurs eux-mêmes.

Hors période de fibrage, c'est-à-dire tant que le centrifugeur n'est pas alimenté en verre fondu, le point essentiel est d'éviter une surchauffe locale en jouant si nécessaire sur la température et/ou le débit des gaz émis par le brûleur annulaire. La régulation est donc effectuée sur la base du point B comme indiqué dans le brevet EP-B1-219 433.

En période de fibrage, on ne cherche plus spécialement à réguler le brûleur annulaire qui a normalement atteint un équilibre propice à un étirage parfaitement régulier. Par contre les trois points A, B et C donnent des indications bien caractéristiques du processus de fibrage.

Ainsi si les températures relevées sont trop élevées cela signifie pour le point haut A que le centrifugeur a commencé à pénétrer d'une façon anormale dans la lèvre du brûleur annulaire (cas illustré figure 2 - les déformations étant exagérées pour simplifier la compréhension des phénomènes). La conséquence en est une usure plus grande du centrifugeur. Au bout d'un certain temps cette surchauffe se propage jusqu'au point B, signe d'une corrosion et d'une déformation accentuée et atteint enfin le point C ; dans ce cas le centrifugeur doit être remplacé rapidement. L'opérateur a ainsi une image permanente de l'état réel du centrifugeur dont on sait qu'il dépend non seulement de son "âge" mais aussi des conditions de fabrication et de son exploitation, sa durée de vie variant entre par exemple quelques heures seulement, si la pièce présente des défauts de fonderie et plusieurs centaines d'heures. Un moyen possible pour corriger cette anomalie est de réduire la vitesse de rotation du centrifugeur.

Une telle augmentation progressive de la température est également observée si le verre utilisé est trop chaud donc trop fluide ; il va alors avoir tendance à passer avec un plus fort débit selon les orifices du bas de la bande périphérique, et le point le plus chaud va de ce fait se situer par exemple à mi-hauteur de la bande périphérique et non aux environs des premières rangées d'orifices de sortie. Dans ce cas, et après vérification de la composition du verre, on peut donc diminuer le chauffage du verre notamment en modulant la puissance électrique fournie aux électrodes des canaux d'alimentation placés à la sortie du four de fusion ou modifier la température et/ou le débit du brûleur interne si celui-ci existe. Il peut également être avantageux de modifier la vitesse de rotation du centrifugeur plus précisément de l'augmenter de manière à faire monter le point le plus chaud.

Nous avons évoqué précédemment le cas d'une augmentation progressive des températures mais il arrive également que cette augmentation soit brutale et généralement associée à un déplacement rapide du point le plus chaud. Ce phénomène est caractéristique d'un afflux de verre fondu dans certaines zones, dû à un début de fissuration du centrifugeur. L'opérateur peut alors intervenir immédiatement et interrompre le fibrage avant que des dégats tels l'explosion du centrifugeur ne se produisent.

Par ailleurs, il peut arriver également que les températures mesurées soient trop basses, ce qui est illustré à la figure 3 et ce qui est dommageable à la qualité des fibres produites qui sont alors étirées à partir de filaments trop épais. Si on exclut une action sur le brûleur externe d'étirage, il faut alors pour obtenir la même finesse de fibres intervenir sur le chauffage interne du centrifugeur opéré par le brûleur interne ou par les inducteurs magnétiques et/ou sur la température du verre fondu. Un cas particulier est celui d'une température nettement trop basse au niveau du point C, on est alors dans la situation où il faut absolument éviter l'enverrage du centrifugeur dû à la dévitrification du verre sur le fond du centrifugeur, fond qui est plus éloigné de la lèvre du brûleur et donc moins chauffé par celui-ci mais qui de plus subit un refroidissement du fait même de la rotation par le brassage de l'air sous le centrifugeur. De préférence, on asservit donc les moyens de chauffage complémentaires du bas du centrifugeur à cette température du point C, cet asservissement étant facilité par le fait qu'on utilise des inducteurs électromagnétiques qui réagissent donc rapidement. Toutefois, la commande des inducteurs est de préférence contrôler par exemple par des butées limitant les réglages des fréquences, car on sait qu'en pratique le chauffage électromagnétique est impuissant à désenverrer un centrifugeur si malgré toutes les précautions prises le verre a dévitrifié, et qu'il est donc inutile voire dangereux de continuer plus avant ce chauffage, un inducteur réglé au maximum de fréquence avec néanmoins une température du bas de bande trop basse doit donc entraîner l'arrêt immédiat de la coulée de verre fondu.

## Revendications

1. Procédé de contrôle de la fabrication de fibres minérales, notamment de fibres de verre, par un procédé de fibrage faisant intervenir une centrifugation interne au moyen d'un centrifugeur dont la bande périphérique est percée d'un grand nombre d'orifices de sortie, selon lequel on mesure le rayonnement émis superficiellement par la bande périphérique en vue de déterminer la température de points de ladite bande périphérique, **caractérisé en ce qu**'on détermine la coordonnée verticale de chacun desdits points mesurés.

2. Procédé de contrôle selon la revendication 1, **caractérisé en ce qu**'un des points mesurés est le point le plus chaud de la partie perforée de la bande périphérique.

3. Procédé de contrôle selon la revendication 1 ou 2, **caractérisé en ce qu'**un des points mesurés correspond au bas de la bande périphérique.

4. Procédé de contrôle selon l'une des revendications précédentes, **caractérisé en ce qu'**un des points mesurés correspond au haut de la bande périphérique.

5. Procédé de contrôle selon l'une des revendications précédentes, **caractérisé en ce que** l'on détermine les températures et coordonnées des points remarquables de la bande (points haut et bas et point le plus chaud), par analyse de la courbe dérivée de la courbe correspondant au profil de température sur la hauteur de la bande périphérique.

6. Procédé de contrôle selon la revendication 3 à 5, **caractérisé en ce que** la température du bas de la bande périphérique sert de grandeur de régulation pour les moyens de chauffage par induction électromagnétique du bas de ladite bande périphérique.

7. Procédé de contrôle selon l'une des revendications 1 à 5, **caractérisé en ce que** lorsque les températures mesurées en phase de fibrage s'écartent de la normale, l'opérateur en est immédiatement averti par des témoins d'alarme et/ou la coulée de verre est automatiquement interrompue.

8. Procédé de contrôle selon l'une des revendications précédentes, **caractérisé en ce qu'**hors fibrage, les températures mesurées servent à la régulation du brûleur extérieur.

## Claims

1. Process for controlling the manufacture of mineral fibres, in particular glass fibres, by means of a fibre-drawing process using internal centrifuging by means of a centrifuge of which a peripheral strip is pierced by a large number of outlet apertures, according to which the radiation emitted from the surface of the peripheral strip is measured in order to determine the temperature of points of the peripheral strip, characterised in that the vertical coordinate of each of the points measured is determined.

2. Control process according to Claim 1, characterised in that one of the points measured is the hottest point of the perforated part of the peripheral strip.

3. Control process according to Claim 1 or 2, characterised in that one of the points measured corresponds to the bottom of the peripheral strip.

4. Control process according to any one of the preceding claims, characterised in that one of the points measured corresponds to the top of the peripheral strip.

5. Control process according to any one of the preceding claims, characterised in that the temperatures and coordinates of the notable points of the strip (top and bottom points and the hottest point) are determined by analysing the curve derived from the curve corresponding to the temperature profile over the top of the peripheral strip.

6. Control process according to Claims 3 to 5, characterised in that the temperature of the bottom of the peripheral strip is used as a regulating value for the means for heating the bottom of the peripheral strip by electromagnetic induction.

7. Control process according to any one of Claims 1 to 5, characterised in that, when the temperatures measured during the fibre-drawing phase differ from the normal, the operator is immediately warned thereof by alarm indicators and/or the pouring of the glass is automatically interrupted.

8. Control process according to any one of the preceding claims, characterised in that, outside the fibre-drawing process, the temperatures measured are used for regulating the external burner.

## Patentansprüche

1. Verfahren zur Kontrolle der Herstellung von Mineralfasern, insbesondere Glasfasern, durch ein Zerfaserungsverfahren unter Anwendung einer internen Zentrifugierung mittels eines Schleuderorgans, dessen Umfangswand mit einer großen Anzahl von Austrittöffnungen versehen ist, wonach die von der Oberfläche der Umfangswand emittierte Strahlung gemessen wird, um die Temperatur von Stellen dieser Umfangswand zu bestimmen, **dadurch gekennzeichnet, daß** die vertikale Koordinate jeder der Meßstellen bestimmt wird.

2. Verfahren nach Anspruch 1, **dadurch gekennzeichnet, daß** eine der Meßstellen die wärmste Stelle des perforierten Abschnitts der Umfangswand ist.

3. Verfahren nach Anspruch 1 oder 2, **dadurch gekennzeichnet, daß** eine der Meßstellen dem Unterteil der Umfangswand entspricht.

4. Verfahren nach einem der vorhergehenden Ansprüche, **dadurch gekennzeichnet, daß** eine der Meßstellen dem Oberteil der Umfangswand entspricht.

5. Verfahren nach einem der vorhergehenden Ansprüche, **dadurch gekennzeichnet, daß** die Temperaturen und Koordinaten der beachtenswerten Stellen der Wand (obere und untere Stelle und wärmste Stelle) durch eine Analyse derjenigen Kurve bestimmt werden, die von der dem Temperaturprofil über die Höhe der Umfangswand entsprechenden Kurve abgeleitet ist.

6. Verfahren nach den Ansprüchen 3 bis 5, **dadurch gekennzeichnet, daß die** Temperatur des Unterteils der Umfangswand als Regelgröße für die Mittel zum Beheizen des Unterteils der Umfangswand durch elektromagnetische Induktion dient.

7. Verfahren nach einem der Ansprüche 1 bis 5, **dadurch gekennzeichnet, daß** der Bediener von Warneinrichtungen unverzüglich benachrichtigt wird und/oder die Glasschmelzezufuhr automatisch unterbrochen wird, wenn die gemessenen Temperaturen in der Zerfaserungsphase vom Normalzustand abweichen.

8. Verfahren nach einem der vorhergehenden Ansprüche, **dadurch gekennzeichnet, daß** die gemessenen Temperaturen außerhalb der Zerfaserung zur Regulierung des Außenbrenners dienen.
